# EUROPÄISCHE PATENTSCHRIFT

(11) **EP 1 420 930 B1**
(45) Veröffentlichungstag und Bekanntmachung des Hinweises auf die Patenterteilung: **23.11.2005**
(21) Anmeldenummer: 02747131.7
(22) Anmeldetag: 26.07.2002
(51) Int. Cl.: B29C 45/38, B29C 45/56

(54) **VERFAHREN UND VORRICHTUNG ZUM AUTOMATISCHEN HERSTELLEN DÜNNER PLATTEN**
METHOD AND DEVICE FOR THE AUTOMATIC PRODUCTION OF WAFERS
PROCEDE ET DISPOSITIF DE PRODUCTION AUTOMATIQUE DE PLAQUES MINCES

(30) Priorität: 31.08.2001 CH 162101
(43) Veröffentlichungstag der Anmeldung: 26.05.2004
(73) Patentinhaber: Netstal-Maschinen AG, 8752 Näfels (CH)
(72) Erfinder: WEINMANN, Robert, CH-8872 Weesen (CH); VOGT, Eric., 8856 Tuggen (CH)
(74) Vertreter: Ackermann, Ernst
(86) Internationale Anmeldenummer: PCT/CH2002/000423
(87) Internationale Veröffentlichungsnummer: WO 2003/020491

(56) Entgegenhaltungen:
- EP-A- 0 620 097
- EP-A- 1 101 592
- PATENT ABSTRACTS OF JAPAN vol. 014, no. 488 (M-1039), 24. Oktober 1990 (1990-10-24) -& JP 02 198816 A (MATSUSHITA ELECTRIC IND CO LTD), 7. August 1990 (1990-08-07)
- PATENT ABSTRACTS OF JAPAN vol. 018, no. 452 (M-1661), 23. August 1994 (1994-08-23) -& JP 06 143364 A (MEIKI CO LTD), 24. Mai 1994 (1994-05-24)

## Beschreibung

### Technisches Gebiet

Die Erfindung betrifft ein Verfahren zum automatischen Herstellen von dünner Platten, insbesondere von optischen Datenträgern oder CD's, mit einer Mittelöffnung, nach dem Oberbegriff des Anspruchs 1. Die Erfindung betrifft ferner eine Vorrichtung nach dem Oberbegriff des Anspruchs 7.

### Stand der Technik

Klassische Spritzgiessmaschinen weisen in der Regel zwei Formhälften auf. Die eine bewegliche, erste Formhälfte wird mittels einem Antriebssystem gegenüber einer festen Antriebsträgerplatte für das Formschliessen sowie das Formöffnen bewegt. Die beiden Formhälften werden bei Beginn von jedem Giesszyklus mit einer derart grossen Schliesskraft zusammengepresst, dass es selbst unter den höchsten Schmelzedrücken zu keinem Öffnen der Formen kommen kann. Typisch beim klassischen Spritzgiessen ist eine länger dauernde Nachdruckphase nach Abschluss der vollständigen Formfüllung. Der Nachdruck wird durch die Einspritzschnecke über den Anguss im Sinne eines hydraulischen Druckes aufrechterhalten. Beim klassischen Spritzgiessen ist mit der exakten Kavität in der Spritzgiessform das fertige Spritzgiessteil definitiv festgelegt.

Für die Herstellung von flachen Datenträgern hat sich eine zusätzliche Gattung Spritzgiessmaschinen etabliert. Dabei steht im Zentrum das Prägen und Ausprägen der Dateninformation durch eine bewegbare Formhälfte. Besonders für die Produktion von optischen Datenträgern oder CD's werden dabei die folgenden Hauptphasen des Herstellzyklusses unterschieden:
- Formfüllung
- Prägen und Ausprägung der Dateninformation
- Nachdruck in der Abkühlphase zur Erhaltung der Oberflächenstruktur, auch beim Schwinden des Spritzgiessteiles.

Die Endform des Spritzgiesskörpers wird erst durch Zusammenstossen der beiden Formhälften während der Prägephase nach anfänglich nur teilweiser Formhohlraumfüllung erreicht. Die Prägephase ist hier eine Schlüsselphase. Die angetriebene Formhälfte wird für die Herstellung von flachen Datenträgern vor dem Einspritzen an eine vorbestimmte Position gefahren und etwa für die Zeitdauer des Einspritzens in der Position eines Prägespaltes gehalten. Danach wird unter Anwendung des Kompressionsdruckes die entsprechende Platine bzw. die angetriebene erste Formhälfte näher an die zweite Gegenformhälfte gestossen mit gleichzeitiger Aufbringung des Prägedruckes. Der Prägespalt wird bis auf einen kleinen Abstand aufgehoben. Es wird ein vollflächig wirksamer Nachdruck durch Anwendung eines Kompressionsdruckes direkt über den Formhälften erzeugt, wofür eine angetriebene Formhälfte gegen die Gegenformhälfte verschoben wird. Unter dem Begriff Nachdruck wird hier die flächigaufgebrachte Kraft durch die eine Formhälfte verstanden. Der Nachdruck ist der sinngemässe Ersatz für das durch die Einspritzschneckenbewegung im klassischen Spritzgiessen einwirkende "hydraulische" Nachdrücken mittels Druckübertragung der flüssigen Schmelze über die Einspritzdüse.

Ein ganz besonderes Charakteristikum von flachen Datenträgern ist die Mittelöffnung. Die Mittelöffnung dient beim Gebrauch des Datenträgers als Halterung und zur Zentrierung. Die innere Öffnung muss deshalb mit höchster Genauigkeit und der innere Rand mit höchster Oberflächengüte hergestellt werden. Im Stand der Technik unterscheidet man zwischen einem "Soft-Cut" sowie einem "Hard-Cut". Beim "Soft-Cut" wird in der noch flüssigen Masse die Mittelöffnung hergestellt. Der "Hard-Cut" wird erst vorgenommen, wenn das Produkt schon weitgehend verfestigt ist.

Die CH-PS 453 671 schlägt einen "Hard-Cut", kurz bevor die Spritzmasse vollständig verfestigt ist, vor. In jeder der beiden Giessformen befindet sich je ein senkrecht zu dem flachen Körper beweglicher Stempel. Diese beiden Stempel erzeugen mit einer koordinierte Durchdringbewegung durch den flachen Körper zuerst auf die eine und dann auf die andere Seite die Mittelöffnung. Als Rest verbleibt bei jedem Schnitt ein Anguss, der zusammenhängt mit der kreisförmigen "Stanzscheibe".

Die EP-A-0 051 252 schlägt ein eigentliches Tellerventil vor, das auf der Seite der Spritzdüse angeordnet ist und je nach Stellung die Schmelzmassezuführung nur während der Einspritzphase frei gibt und diese während der übrigen Zeit verhindert. Als grosser Vorteil wird durch den vorgeschlagenen Ventilzusammenbau mit dem dabei zum Einsatz kommenden "Soft-Cut" kein Angussteil erzeugt. Nachteilig ist aber der viel grössere Konstruktionsaufwand für den Antrieb der bewegten Teile auf der Seite der Spritzdüse.

Die US-PS 4 466 934 schlägt in zwei Ausführungsvarianten sowohl den "Hard-" wie den "Soft-Cut" vor. Der "Hard-Cut" wird durch einen rohrförmigen Schneidestempel vorgenommen, welcher die zumindest teilweise verfestigte Masse mittels einer entsprechenden Schneidbewegung in Richtung Matrize auf der Gegenseite bzw. Einspritzseite durchstösst. Die ausgestanzte Scheibe für die Mittelöffnung befindet sich innerhalb des rohrförmigen Schneidestempels und wird durch ein Führungsrohr mit einem Hinterschnitt in einer zentralen Bohrung in verfestigtem Zustand gehalten. Damit eine definierte Abrissstelle auf der Düsenseite entsteht, wird das Mündungsstück der Einspritzdüse verengt ausgebildet, was strömungstechnisch für das Einspritzen eher nachteilig ist. Nach dem Öffnen der beiden Formhälften wird als erstes über einen Ausstosser die ausgestanzte Scheibe aus dem rohrförmigen Schneidstempel befreit und ausgeworfen. Danach kann der flache Datenträger aus den Formhälften entnommen werden.

Die JP-A-02 198 816 offenbart ein Verfahren zum automatischen Herstellen von Platten mit einer Mittelöffnung, wobei die beiden Formhälften jeweils für eine Startposition eines Spritzzyklusses für die Einspritzphase positioniert. Eine dosierte Menge Harz wird eingespritzt. Der Durchbruch für die Mittelöffnung wird durch eine Bewegung eines Stemples nach Abschluss der Einspritzphase, während der Abkühlphase jedoch vor einer vollständigen Verfestigung des Angussbereiches, durch Reduktion des Angussvolumens erzeugt. Das Giessteil wird bis zu einer genügenden Entnahmefestigkeit abgekühlt und die fertige Platte sowie der Anguss mit Mittelöffnungsteil den Formhälften entnommen. Der zeitliche Ablauf für die Herstellung des Durchbruches für die Mittelöffnung sowie der Beginn der Dosierphase ist offen gelassen. Auch gemäss der EP-A-0 620 097 ist der zeitliche Ablauf für die Herstellung des Durchbruchs für die Mittelöffnung sowie der Beginn der Dosierphase offen gelassen.

Die genannten Lösungen des Standes der Technik befassen sich hauptsächlich mit der Erzeugung der Mittelöffnung. Untergeordnet bleibt dabei eine mögliche Ausgleichsströmung zwischen dem Forminnenraum und dem Schneckenvorraum, wie an Hand eines weiteren Ausführungsbeispieles des Standes der Technik gemäss EP 0 640 460 erläutert wird. Die Ausgleichsströmung muss unter zwei Gesichtspunkten betrachtet werden. Bei der Herstellung von flachen Datenträgern kann ein Schmelzedruck sowohl über die lineare Bewegung der Einspritzschnecke wie auch über die bewegliche Formhälfte aufgebaut werden. In beiden Fällen stellt sich kurzfristig, entsprechend den Druckverhältnissen, eine Ausgleichsströmung zwischen Forminnenraum und dem Schneckenvorraum ein. Die EP 0 640 460 schlägt vor, dass man die Werkzeugsöffnungsoperation startet, während das Einspritzen voranschreitet, und man den Druck innerhalb der Kavität mittels eines Drucksensors überwacht, während der Injektionsschritt voranschreitet und dass man die Injektion des Harzes unterbricht, wenn ein vorbestimmter Druck erreicht worden ist, um den Rückfluss von geschmolzenem Harz aus der Kavität während des Schliessschrittes zu ermöglichen. Der vorbestimmte Druck kann zwischen 200 und 300 kg/cm² bei einer gewünschten Dicke des Formteiles von weniger als 1 mm betragen. Der Drucksensor wird bei 70 bis 80% des Fliessabstandes des geformten Produktes installiert. Die beschriebene Ausgleichsströmung hat einen direkten Einfluss auf das Endgewicht des zu formenden Teiles, weil der "Soft-Cut" die Verbindung zwischen dem Schneckenvorraum und der Kavität für den fertigen Datenträger unterbricht. Dies bedeutet, dass ein Datenträger, je nachdem, ob ein "Soft-Cut" oder ein "Hard-Cut" vorgenommen wird, z.B. nach der US-PS 4 466 934, ein unterschiedliches Endgewicht haben kann. In letzter Konsequenz bedeutet dies, dass die Endqualität des Datenträgers nicht nur in dem Bereich der Mittelöffnung sondern auch insgesamt von der Art der Herstellung der Mittelöffnung beeinflusst wird.

Der Erfindung wurde nun die Aufgabe zugrunde gelegt, ein Verfahren sowie eine Vorrichtung für die Herstellung dünner Platten mit Mittelöffnung zu entwickeln, welche eine Optimierung eines ganzen Spritzgiessvorganges und in der Steigerung der Gewichtsgenauigkeit der fertigen Spritzgiessteile ferner eine Optimierung der Qualität des ganzen Datenträgers durch Verwendung einer offenen Düse und eine Vereinfachung des Werkzeugaufbaues erlaubt.

### Darstellung der Erfindung

Das erfindungsgemässe Verfahren ist dadurch gekennzeichnet, dass der Durchbruch für die Mittelöffnung nach Abschluss der Nachdruckphase oder der Prägephase, durch Rückströmen in den Schneckenvorraum erzeugt wird und die Dosierphase für den jeweils nachfolgenden Spritzzyklus mit dem Abschluss der Bewegung des Stempels für den Durchbruch der Mittelöffnung beginnt, wobei die Rückströmmasse aus der Reduktion des Angussvolumens für die Dosiermenge miteingerechnet wird.

Die erfindungsgemässe Vorrichtung ist dadurch gekennzeichnet, dass die Steuermittel ausgebildet sind zur Ausführung der Stempel bewegung, zeitlich nach dem Abschluss der Nachdruckphase oder der Prägephase, wobei die Steuermittel derart ausgelegt sind, dass die Dosierphase für den jeweils nachfolgenden Spritzzyklus mit dem Abschluss der Bewegung des Stempels für den Durchbruch der Mittelöffnung beginnt, und die Rückströmmasse aus der Reduktion des Angussvolumens für die Dosiermenge miteingerechnet wird.

Vom Erfinder ist erkannt worden, dass von der Qualität des Endproduktes aus gesehen sowohl die Funktion Ausgleichsströmung wie auch die Funktion der Erzeugung der Mittelöffnung wichtige Parameter sind. Von der Kühlwirkung aus betrachtet ist der Produktionsablauf des optischen Datenträgers in mehreren Hinsichten privilegiert:
● Die Schmelzemasse wird, abgesehen von der allerersten Einspritzmenge, in den Bereich des Plattenteils eingespiesen und hat damit für die Kühlwirkung einen zeitlichen Vorsprung.
● Der Hauptteil des Angusses wird zuletzt von der Düse zugeführt und hat am Ende der Einspritzphase die höchste Temperatur.
● Der Anguss liegt in einem zentralen Bereich der beiden Formhälfen mit ungünstigeren Kühlwirkungen.

Aus den genannten Gründen findet die Abkühlung und damit die Verfestigung des Angusses merklich später statt in Bezug auf den fertigen flachen Datenträger ohne das Lochteil in der Mitte. Wenn der äussere flache Teil des Giesskörpers bereits weitgehend verfestigt ist, ist der Anguss noch während einer Zeitspanne von bis zu 1 Sekunde flüssig bzw. nur teilweise erstarrt. Die neue Erfindung nützt diese Tatsache aus, indem die Erzeugung des Durchbruches für die Mittelöffnung optimal koordiniert wird mit den übrigen Phasen eines Giesszyklusses. Es ergeben sich daraus unerwartet viele Vorteile:
- Für die fertigen Datenträger kann die Qualität auch in Bezug auf Gewichtstoleranzen optimiert werden.
- Die Mittelöffnung kann in Bezug auf die Qualität der zylindrischen Schnittöffnung optimiert werden.
- Die Strömungsverhältnisse für die Einspritzphase können optimiert werden.
- Der Werkzeugaufwand ist verhältnismässig gering.
- Der Aufwand für Antriebe und Steuerung ist kaum grösser als im Stand der Technik.

Für die neue Erfindung stehen drei Sachverhalte im Vordergrund:
- eine Optimierung des Schneideinsatzes in zeitlicher Hinsicht bzw. in Bezug auf die "Konsistenz" der Giessmasse;
- eine Reduktion des Angussvolumens;
- eine Rückströmung der Volumenreduktiön in den Schneckenvorraum.

Mit der neuen Lösung kann eine offene Düse verwendet werden. Daraus ergeben sich grosse Vorteile im Hinblick auf eine Vereinfachung des ganzen Werkzeugaufbaues. Werkzeuge lassen sich auch insofern verbessern, als damit Produkte mit noch besserer Qualität herstellbar sind.

Die Erfindung erlaubt ferner eine ganze Anzahl besonders vorteilhafter Ausgestaltungen. Es wird dazu auf die Ansprüche 2 bis 9 sowie 11 bis 14 Bezug genommen.

Die Erzeugung des Druchbruches kann zeitlich und/oder als Funktion der Schmelzetemperatur und/oder als Funktion des Druckes in der Form gesteuert werden. Die neue Lösung gestattet damit, gleichsam passiv den "Cut" während dem bestmöglichen Zeitabschnitt eines ganzen Spritzzyklusses oder aber im Hinblick auf eine Optimierung der übrigen Parameter vorzunehmen. In der Regel ist jede Steuerung allein aufgrund eines zeitlich optimierten Ablaufes am einfachsten und konstengünstigsten. Es wird aber auch die Möglichkeit vorgeschlagen, jeden der drei Parameter in beliebiger Kombination zur Steuerung zu nutzen. Der Durchbruch für die Mittelöffnung wird erst nach Abschluss der Nachdruckphase oder nach Abschluss der Prägephase während der Abkühlphase durch einen Stempel, welcher auf eine matrizenartige Öffnung auf der Seite der Spritzdüse zu- und wegbewegbar ist, erzeugt. Die dabei auftretende Verdrängungswirkung bzw. Ausgleichsströmung, welche sich auf den Ausgussbereich beschränkt, kann über Steuermittel auf der Einspritzseite kompensiert werden. Wie an sich bekannt, kann der Stempel nach innen einen Hinterschnitt sowie einen Ausstosser aufweisen. Durch den Hinterschnitt bleibt der Anguss nach genügender Verfestigung im Stempelvorderteil gehalten. Nach geöffneter Form wird durch Betätigung des Ausstossers der Anguss abgeworfen.

Die Spritzdüse bleibt während der normalen Produktion immer offen und die Düse vorzugsweise an das Spritzwerkzeug angepresst. Gemäss einem ganz besonders vorteilhaften Ausgestaltungsgedanken wird die Einspritzdüse verschliessbar ausgebildet. Zumindest die erstmalige Dosierung beim Anfahren für eine neue Produktion kann bei geschlossener Düse und die darauffolgenden Produktionszyklen bei dauernd offener Düse durchgeführt werden. In der Spritzgiesspraxis ist es bekannt, dass die erste hergestellte Platte von einer neuen Produktionsserie unbrauchbar ist. Es ist im Stand der Technik nicht möglich, die Dosierung für den jeweils ersten Schuss mit genügender Genauigkeit vorzubereiten. Nachteilig ist dabei, dass die Ergebnisse der ersten Platte nur schlecht als Basis für die Korrektur einer zweiten Platte verwendet werden können. Mit der neuen Lösung müssen für die erste Platte einer neuen Serie nur die geometrischen Daten zwischen Verschluss und Düsenspitze bekannt sein, so dass diese bei der Dosierung für den ersten Schuss berücksichtigt werden können. Das Erzeugnis des ersten Schusses ist gemäss der neuen Lösung theoretisch bereits brauchbar, kann aber zumindest für eine Feinkorrektur für den zweiten Schuss verwendet werden.

Dem Stempel sowie einem in den Stempel geführten Ausstosserbolzen werden für den Anguss steuerbare Antriebsmittel zugeordnet, wobei
- für die Einstellung einer Giessposition der Stempel mit zurückgezogenem Ausstosserbolzen leicht in die Formkavität vorstehend positioniert wird,
- der Stempel für die Cut-Bewegung bis zum leichten Eintauchen in eine matrizenartige Öffnung auf der Spritzseite der Form gepresst wird,
- und die Rückzugbewegung des Stempels vorzugsweise im Zuge der formöffnung, nach genügender Abkühlung und Verfestigung des Angusses erfolgt.

Der Stempel bildet bei zurückgezogenem Ausstosserbolzen mit einem Hinterschnitt in dem Stempel einen Halteraum für den Anguss, in dem dieser nach genügender Verfestigung gefasst und nach geöffneter Form durch Betätigung des Ausstosserbolzens wieder ausgestossen wird.

Der Stempel kann einteilig oder zweiteilig, etwa gemäss der US-PS 4 466 934, ausgebildet werden. Der einteilige Stempel hat insofern Vorteile, als dieser eine grosse Standzeit hat gegenüber einem rohrförmigen Stempelteil mit messerscharfem kreisförmigem Rand. Vorteilhafterweise weist die Vorrichtung eine feststehende Formhälfte sowie eine bewegliche Formhälfte auf, wobei der Stempel mit Auswerferbolzen auf der Seite der beweglichen Formhälfte und die Einspritzdüse auf der Seite der feststehenden Formhälfte angeordnet ist.

Es wird ferner vorgeschlagen, den Düsenverschluss als Nadel-, Drehschieber- oder Steckschieberverschluss auszubilden. Bei der neuen Lösung ist die Art und Häufigkeit der Betätigung des Düsenverschlusses grundsätzlich nicht eingeschränkt. Bevorzugt wird jedoch nur eine Betätigung zu Beginn einer neuen Produktionsserie. Dafür kann der konstruktive Aufbau relativ einfach und robust gewählt werden. Die Frage der Standzeit stellt sich nahezu nicht. Der Verschluss kann als gesteuertes Startventil ausgebildet sein, derart, dass beim erstmaligen Anfahren für eine neue Produktionsserie der Verschluss während der ersten Dosierphase geschlossen, für die anschliessenden normalen Produktionszyklen dauernd offen und die Düse vorzugsweise dauernd am Werkzeug angepresst bleibt.

Der Verschlusskörper weist in offenem Zustand vorzugsweise einen freien Durch strömquerschnitt ohne Flussströmung zwischen Schneckenvorraum und der Kavität der Spritzform auf.

### Kurze Beschreibung der Erfindung

Die Erfindung wird nun an Hand einiger Ausführungsbeispiele mit weiteren Einzelheiten erläutert. Es zeigen:
- die Figur 1: eine Spritzgiessmaschine des Standes der Technik für die Herstellung von z.B. CD's mit hydraulischem Antrieb;
- die Figur 2: schematisch einen Schnitt durch eine Maschine mit elektromechanischem Antrieb;
- die Figur 3: die verschiedenen an sich bekannten Phasen eines ganzen Spritzzyklusses für die Herstellung von flachen Datenträgern mit Einsatzmöglichkeiten für den "Soft-Cut";
- die Figur 4: den Prägekraftverlauf in Bezug auf die Figur 3;
- die Figur 5: die neue Lösung mit den Kernelementen;
- die Figur 6a: den Dosiervorgang gemäss neuer Lösung bei geschlossenem Startventil, wobei die Lage der Formhälften bei Beginn der Schliessphase dargestellt ist;
- die Figur 6b: den Beginn der Einspritzphase gemäss neuer Lösung;
- die Figur 6c: die Situation am Ende der Einspritzphase;
- die Figur 7a: das Ende der Schneidbewegung für die Herstellung der Mittelöffnung;
- die Figur 7b: die Abkühlphase für den Anguss und Beginn der Dosierphase;
- die Figur 7c: die beiden Formhälften sind geöffnet, der flache Datenträger und der Anguss werden noch an der beweglichen Formhälfte gehalten;

### Wege und Ausführung der Erfindung

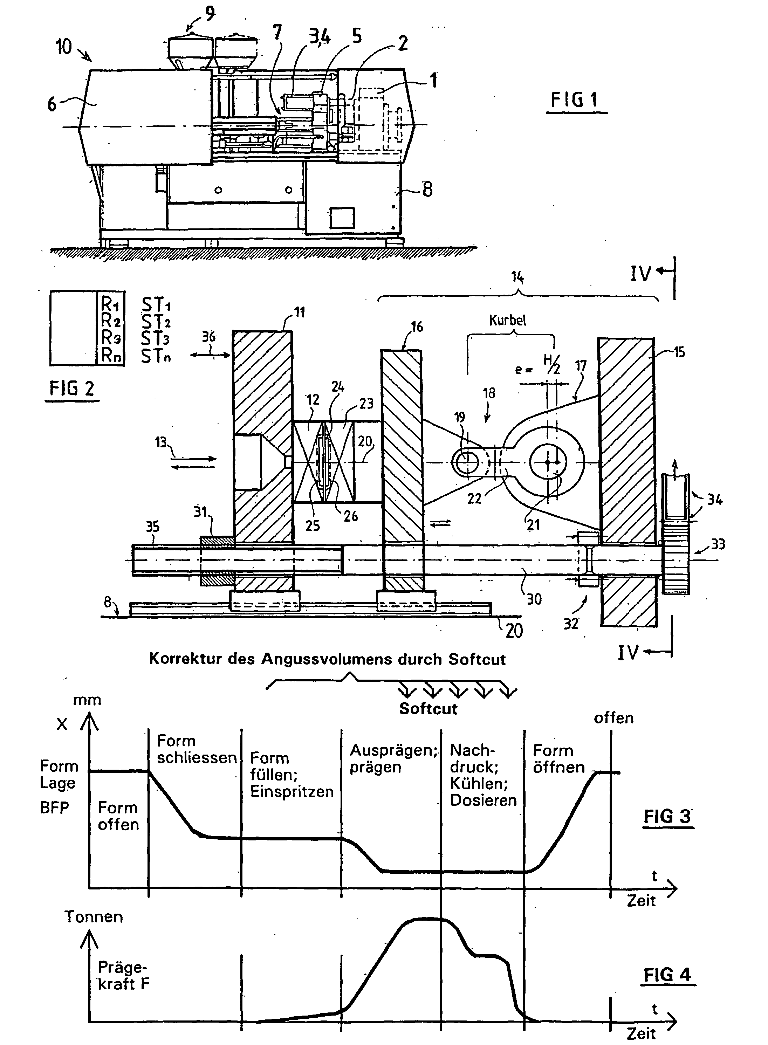

Die Figur 1 zeigt eine bekannte Lösung des Standes der Technik. Mit der Maschine wird eine CD in 3,7 Sekunden oder weniger hergestellt. Es handelt sich um eine Lösung der Anmelderin. Dargestellt ist eine vollhydraulische Maschine 10 mit sehr guten Eigenschaften in Bezug auf die Maschinenstabilität und weist drei Säulen sowie die Möglichkeit für einen Kurz- sowie einen Lahghub auf. Der Kurzhub liegt bei 70 bis 80 mm, und die Schliesskraft ist bei etwa 600 kN. Der Wartungshub liegt bei etwa total 300 mm. Eine Formplatte 1 ist fest mit einem Maschinenständer 8 verbunden. Die Zugstangen 2 sind verschraubt mit der Formplatte 1, wobei am anderen Ende der Zugstangen 2 ein Kolbenkopf 3 sich innerhalb eines Zylinders 4 befindet. Die Formplatte 5 ist in einer Produktionsstellung gezeichnet, wobei der Kolbenkopf 3 dauernd gegen eine Schulter der Zugstangen 2 drückt. Mit relativ geringen Kräften bewegt sich über zwei Hilfszylinder ein Schliesskolben vor- und rückwärts über den ganzen Kurzhub. Der entsprechende Oeldruck wird nur für das Aufbringen der grossen Schliesskraft in einer Kolbenkammer aufgebracht. Für das Wechseln eines Stampers in der Form werden die drei Zylinder an den Zugstangen angesteuert, und die Formplatte 5 öffnet sich um den Wartungshub. Die Maschine 10 ist mit geöffneter Schutztüre 6, mit Sicht auf den Formschluss und den Einspritzzylinder 7, dargestellt. Das Rohmaterial wird über Füllbehälter 9 der Maschine zugeführt, über den Einspritzzylinder erwärmt und unter Druck in die Kavitäten der Formen gespritzt.

Die Figuren 1 und 2 zeigen das Grundkonzept für die Herstellung von flachen Datenträgern, wie etwa Kompaktdisks. Im Zentrum der Maschine ist eine Kavität, welche letztlich die äussere Form des Datenträgers bestimmt. Im Laufe der Entwicklung des Produktionsprozesses wurden verschiedene Konzepte verfolgt.

Beim Prägeverfahren wird eine Menge der Spritzmasse dosiert in die Kavität gepresst, so dass ein Teil der Kavität gefüllt wird. Vorgängig der Füllung wird durch Bewegen der Formplatte 1 oder der Formplatte 5 ein vorbestimmter Kompressionsspalt gebildet. Nach Abschluss der Formfüllphase bzw. des Einspritzvorganges wird der eigentliche Prägevorgang eingeleitet. Dafür wird die bewegliche Formplatte in Richtung der Kavität bewegt und unter Aufbringen einer maximalen Kraft der Formhohlraum bzw. die Kavität verkleinert und die Masse verdichtet. In älteren Verfahrenwurde dafür der Kompressionsspalt bis auf 0 aufgehoben. In neueren Lösungen werden die Werkzeuge nicht mehr auf Anschlag gefahren. Es soll vielmehr ein Restspalt für eine exakte Endregelung, auch nach Abschluss der Prägung, verbleiben.

Die Figur 2 zeigt ein Beispiel der neuen Lösung mit über Zahnriemen angetriebenen Säulen 30. Auf der linken Bildseite der Figur 2 ist die düsenseitige Werkzeugaufspannplatte bzw. Langhubträgerplatte 11 mit einer beweglichen Formhälfte 12 dargestellt, auf die hin, gemäss Pfeilen 13, die Einspritzdüse 7 zu- und wegbewegt werden kann. Die Langhubträgerplatte 11 kann, je nach gewähltem Konzept, fest oder beweglich an dem Maschinenständer 8 angeordnet werden. Auf der rechten Bildseite befindet sich als eine bevorzugte Lösung eine kompakte Baueinheit 14 mit einem Kurbelantrieb. Die Baueinheit 14 besteht aus einer Antriebsträgerplatte 15 und einer beweglichen Werkzeugaufspannplatte 16, die auf einer Führung 20 auf dem Maschinenbett 8 aufliegt, sowie einer Kurbelträgerkonstruktion 17. Ein Kurbeltrieb 18 ist einerseits über einen Bolzen 19 in der beweglichen Werkzeugaufspannplatte 16 und andererseits über einen Exzenter 21 in der Kurbeltragkonstruktion 17 gelenkig gelagert, derart, dass die Kurbel 22, entsprechend der Exzentrizität e, die Kurbelbewegung ausführen kann. Die Exzentrizität e entspricht der halben Hubhöhe (H/2). Auf der gegenüberliegenden Seite der beweglichen Werkzeugautspannplatte 16 befindet sich die eine bewegliche Formhälfte 23. Mit den beiden Formhälften 12 sowie 23 entsteht in geschlossenem Zustand der Hohlraum bzw. die Kavität 24 für die Einlage des gewünschten scheibenförmigen Formteiles. Üblicherweise wird die CD nicht direkt in den Hohlraum 24 gegossen. In den Hohlraum wird ein- oder beidseitig je ein Stamper 25, 26 eingelegt, welcher als Negativform die Kavität für den herzustellenden flachen Datenträger aufweist. Die Verankerungs- und Haltekraft zwischen den beiden Platten wird durch drei oder gegebenenfalls vier Säulen 30 sichergestellt. Jede Säule 30 ist auf der düsenseitigen Werkzeugaufspannplatte 11 über eine Mutter 31 verankert. An der Antriebsträgerplatte 15 ist ein drehbeweglicher Bund 32 befestigt, welcher über einen Zahnkranz 33 in einen Zahnreifen 34 eingreift. Die feste Mutter 31 greift über ein Innengewinde auf den Gewindelauf 35 jeder Säule 30 ein. Eine Drehbewegung des Zahnkranzes oder des Zahnriemens wird durch die Drehung der Säulen auf die Mutter 31 und den Gewindeverlauf 35 der Säulen in eine Linearbewegung (Pfeile 36) der düsenseitigen Werkzeugaufspannplatte 11 umgesetzt. Diese Bewegung stellt den Lang- oder Wartungshub dar und wird primär beim Stamperschnellwechsel benötigt. Der kurze Arbeitshub wird dagegen über den Kurbeltrieb 18 sowie die bewegliche Werkzeugaufspannplatte bzw. Formhälfte 16 durchgeführt. Die Einspritzeinheit mit Plastifizierzylinder ist der düsenseitigen Werkzeugaufspannplatte 11 und beide elektromotorischen Antriebe der anderen, festen Trägerplatte zugeordnet. Der Wartungshub wird mit einer an sich bekannten "Formbauhöhenverstellung" mittels Radkranz und Zahnrädern an den Säulenmuttern gefahren. Neu wird deshalb auch für -diesen Antrieb ein Motor mit genau positionierbarer Achse, vorzugsweise ein Servomotor mit spielarmem Getriebe, eingesetzt. Zwischen Kurbeltrieb und elektrischem Antriebsmotor befindet sich ein Getriebe, vorzugsweise ein Stirnradgetriebe. Mit C ist eine Steuer-/Regelintelligenz mit Speicher angedeutet, welche der entsprechenden Motorsteuerung/Regelung die jeweils erforderlichen Programmabläufe bzw. Rezepte vorgibt. Im Kasten C ist mit R1, R2, R3, Rw, usw. angedeutet, dass beliebige Rechenleistungen direkt vor Ort installiert und entsprechende Koordinationen direkt durchgeführt werden können. Sinngemäss können die Steuerverbindungen St1, St2, St3, Stw vorgesehen und eine entsprechende Optimierung aller Steuer- und Regelabläufe sichergestellt werden.

Die Figuren 3 und 4 zeigen die wichtigsten Phasen eines Spritzzyklusses und ganz grob mögliche Einsätze für einen "Soft-Cut".

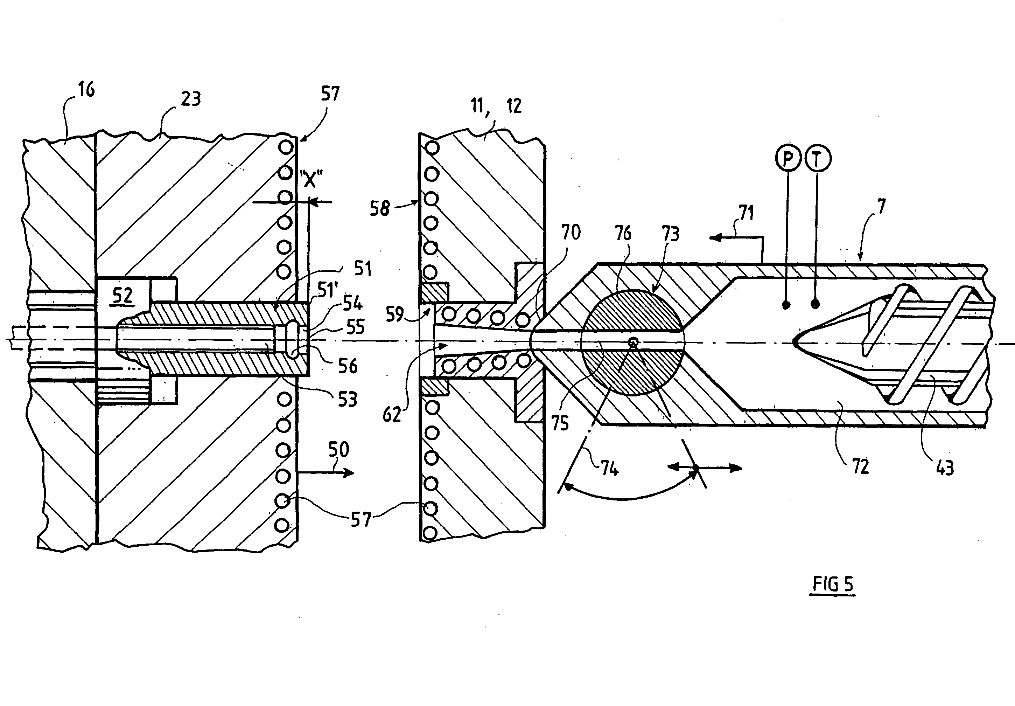

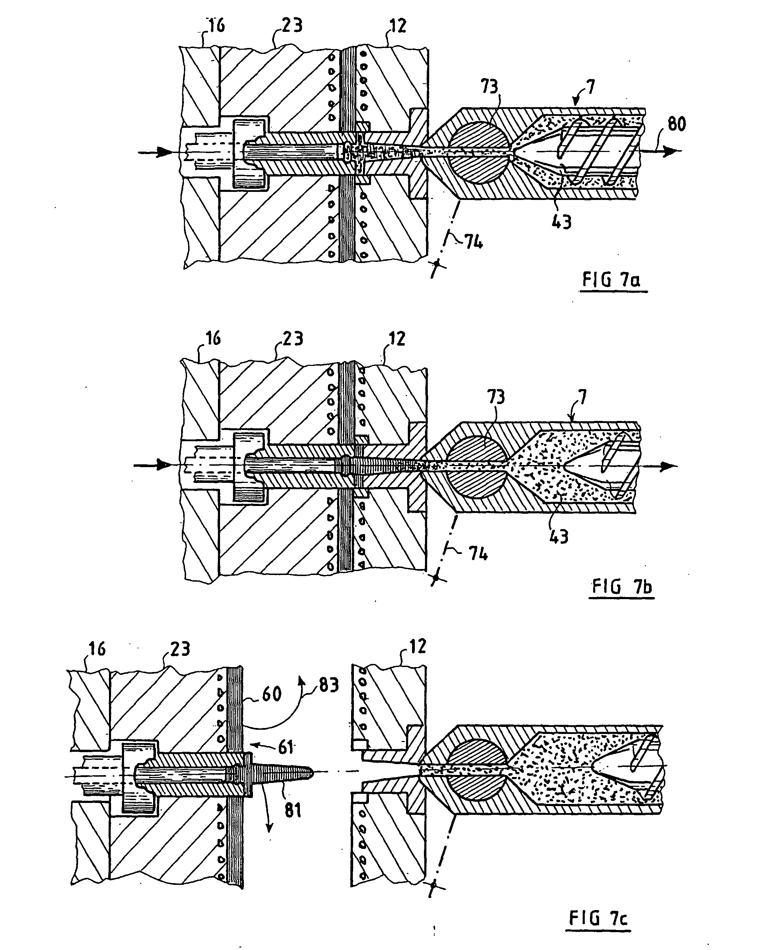

In der Figur 5 sind beide Formhälften, 12 und 16, offen. Mit dem Pfeil 50 ist der Beginn der Schliessbewegung für die bewegliche Form 23 angedeutet. In der Form 23 befindet sich der Stempel 51, welcher über einen Kolben 52 antreibbar ist und in der zurückgezogenen. Stellung dargestellt ist. Ein Auswerferbolzen 53 ist in dem Stempel 51 gleitfähig geführt und hat unabhängige, nicht dargestellte Antriebsmittel für die Auswerferfunktion. Der Auswerferbolzen 53 ist ebenfalls in der zurückgezogenen Stellung und begrenzt einen kleinen Halteraum 54 in der zylindrischen Bohrung 55. In dem Stempel 51 ist ein Hinterschnitt 56 angebracht. Der Stempel 51 überragt die Prägefläche 57 um das Mass "X". Damit wird erreicht, dass die Mittelöffnung 61 (Figur 7c) eines Datenträgers 60 in einem ersten Abschnitt bereits durch Giessen hergestellt wird, und nur die verbleibende Dicke durch den Schnitt mit dem Stempel 51. Mit kleinen Kreisen 57 ist das Kühlsystem in den Formhälften bezeichnet. Zentrisch innerhalb der flachen, kreisringförmigen Fläche 58 ist eine matrizenartige Öffnung 59, welche exakt zu der äusseren Schneidkante des Stempels 51 passt, sodass durch Eindringen des Stempels 51 in die Öffnung 59 die Mittelöffnung 61 in dem Datenträger 60 mit höchster Qualität erzeugbar ist. Die Schmelzezuführung in die Kavität erfolgt über eine sich konisch erweiternde Mündung 62. Eine Einspritzdüse 7 ist mit der Düsenspitze 70 in der rechten Bildhälfte in angepresstem Zustand entsprechend Pfeil 71, welcher die Anpresskraft symbolisiert, dargestellt. In der Einspritzdüse 7 befindet sich die Einspritzschnecke 43.

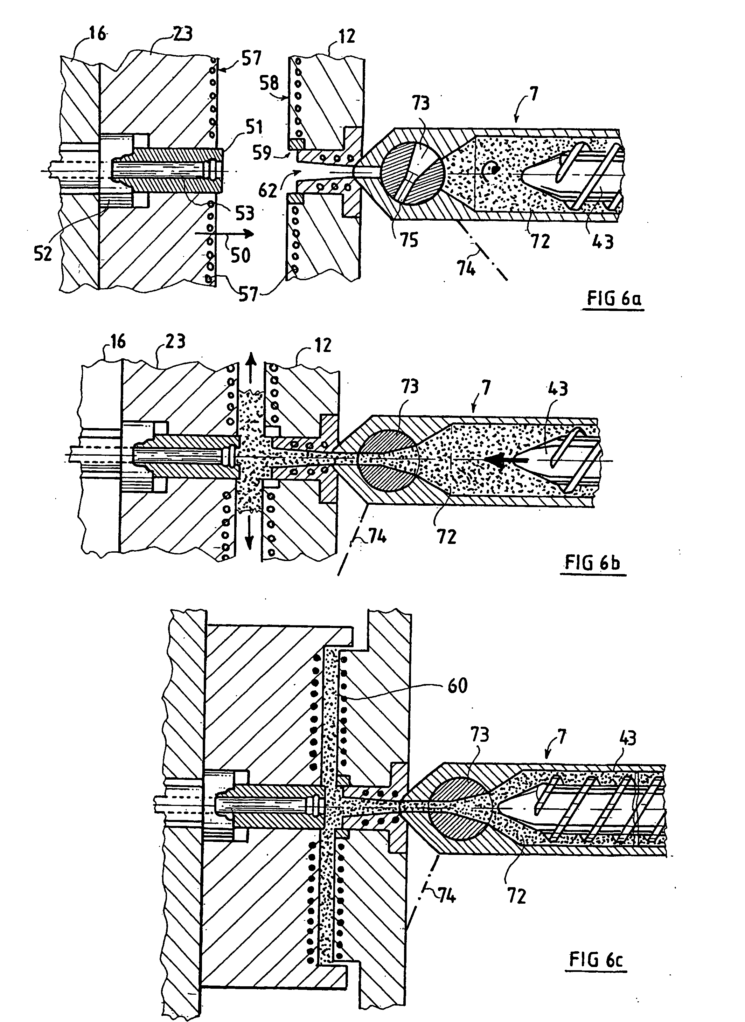

Im vordersten Abschnitt des Schneckenzylinders ist der durch das vordere Ende der Einspritzschnecke 43 begrenzte Schneckenvorraum 72, welcher über einen Dosiervorgang und entsprechender Förder und gleichzeitiger Rückschiebebewegung exakt einstellbar ist. Zwischen Schneckenvorraum 72 und der Düsenspitze 70 ist ein Verschluss in der Form eines Drehschiebers 73 angeordnet, welcher über einen Hebel 74 mit entsprechender Drehbewegung in eine geöffnete oder geschlossene Position einstellbar ist. Die. Figur 5 zeigt die geöffnete Position, welche auch die normale Arbeitsposition ist. Der Verschluss wird bevorzugt als einfaches Startventil, sei es als Nadel-, Drehschieber- oder Steckschieberverschluss ausgebildet und nur für jeden Produkt- oder Formwechsel bzw. bei Beginn einer neuen Produktionsserie verstellt. Je nach Drehposition des Drehschiebekörpers 76 ist der freie Durchströmkanal 75 gesperrt (Figur 6a) oder geöffnet (Figur 6b).

Die Figuren 6a bis 6c und 7a bis 7c zeigen verschiedene wichtige Phasen eines Spritzgiesszyklusses.

Die Figur 6a zeigt die erste Phase von einem Süpritzgresszyktus. Die Formhälften 12 und 23 sind in einer offenen Stellung und am Anfang der Schliessphase (Pfeil 50). Der Drehschieber 73 ist in verschlossener Position. Die Einspritzschnecke 43 führt entsprechend der Dosierphase eine rotative sowie eine axiale Rücklaufbewegung durch, so dass in dem Schneckenvorraum 72 eine exakt berechnete Dosiermenge an flüssiger Schmelze bereitgestellt werden kann. Die geschlossene Stellung des Drehschiebers hat den grossen Vorteil, dass die benötigte Gewichtsmenge mit hoher Genauigkeit vorbereitet werden kann, da sowohl Druck (P) und Temperatur (T) der Schmelze wie auch das Volumen in dem Schneckenvorraum genau definiert bereitgestellt werden können. Der Verschluss ist normalerweise nur am Anfang einer Produktionsserie geschlossen und bleibt danach offen.

Die Figur 6b zeigt die normale Einspritzphase bei geschlossener Form. Die Einspritzschnecke 43 führt eine reine Axialbewegung durch und drückt die in dem Schneckenvorraum bereitgestellte Menge an Spritzmasse über die Düsenspitze sowie den Angussbereich in die Kavität. Der Einspritzvorgang benötigt nur relativ kleine Kompressionswerte. Der Druckaufbau für die Prägephase wird in der Endphase des Einspritzens begonnen. Die Figur 6c zeigt die Endstellung der Prägephase bzw. den Beginn des Schneidevorganges. Die Mittelöffnung in dem Datenträger 60 ist erst ansatzweise durch den vorstehenden Stempelrand angedeutet. Durch entsprechende Steuerung/Regelung der Position der Einspritzschnecke 43 kann die Verkleinerung bzw. Verdrängung des Volumens des Angussbereiches 62 im Schneckenvorraum kompensiert werden. Der Anguss 81 (Figur 7c) ist am Ende des Schneidvorganges noch nicht vollständig verfestigt. Wichtig ist dabei, dass durch die Stempelbewegung mit dem erforderlichen Kraftaufwand das zu verdrängende Volumen im Angussbereich noch genügend fliessfähig ist und in den Schneckenvorraum zurückgefördert bzw. gedrückt werden kann.

In der Figur 7a ist auch die Präge- und Kühlphase sowie der Schneidvorgang vollständig abgeschlossen. Der Spritzling ist fertig, und die Formhälften sind noch in geschlossener Position. Der Anguss 81 wird im Halteraum 54 mit dem Hinterschnitt 56 gehalten. Die Spritzschnecke kann entsprechend Figur 7b bereits den nächsten Dosiervorgang vorbereiten, wobei der Verschluss 73 offen bleibt. Die Figur 7c zeigt den letzten Abschnitt einer Spritzphase vor der Entnahme, z.B. einer fertigen CD (Pfeil 83) mit einer, in höchster Qualität erstellten Mittelöffnung 61. Für Entnahmehilfen, wie Luftunterstützung oder Roboterarme, wird auf den bekannten Stand der Technik Bezug genommen:

## Patentansprüche

1. Verfahren zum automatischen Herstellen von dünner Platten, insbesondere von optischen Datenträgern (80) oder CD's mit einer Mittelöffnung, wobei die beiden Formhälften jeweils für eine Startposition eines Spritzzyklusses für die Einspritzphase positioniert, eine dosierte Menge Harz über eine Spritzdüse eingespritzt, der Durchbruch für die Mittelöffnung durch eine Bewegung eines Stempels nach Abschluss der Einspritzphase während der Abkühlphase jedoch vor einer vollständigen Verfestigung des Angussbereiches, durch Reduktion des Angussvolumens erzeugt wird, das Giessteil bis zu einer genügenden Entnahmefestigkeit abgekühlt und die fertige Platte sowie der Anguss mit Mittelöffnungsteil den Formhälften entnommen werden,
**dadurch gekennzeichnet,**
**dass** der Durchbruch für die Mittelöffnung (61) nach Abschluss der Nachdruckphase oder der Prägephase durch Rückströmen in den Schneckenvorraum (47, 72) erzeugt wird und die Dosierphase für den jeweils nachfolgenden Spritzzyklus mit dem Abschluss der Bewegung des Stempels (51) für den Durchbruch der Mittelöffnung beginnt, wobei die Rückströmmasse aus der Reduktion des Angussvolumens für die Dosiermenge miteingerechnet wird.

2. Verfahren nach Anspruch 1,
**dadurch gekennzeichnet,**
**dass** für die Erzeugung der Mittelöffnung (61) der Stempel auf eine matritzenartige Öffnung zu- und wegbewegt und zeitlich und/oder als Funktion der Schmelzetemperatur und/oder als Funktion des Druckes in der Form gesteuert wird,

3. Verfahren nach einem der Ansprüche 1 oder 2,
**dadurch gekennzeichnet,**
**dass** die Spritzdüse (7) während der Produktion immer offen und die Düse vorzugsweise an das Spritzwerkzeug angepresst bleibt.

4. Verfahren nach einem der Ansprüche 1 bis 3,
**dadurch gekennzeichnet,**
**dass** dem Stempel (51) sowie einem in den Stempel (51) geführten Ausstosserbolzen (53) für den Anguss steuerbare Antriebsmittel zugeordnet sind, wobei
- für die Einstellung einer Giessposition der Stempel (51) mit zurückgezogenem Ausstosserbolzen (53) leicht in die Formkavität vorstehend positioniert wird,
- der Stempel (51) für die Bewegung bis zum leichten Eintauchen in eine matrizenartige Öffnung auf der Spritzseite der Form gepresst wird,
- und die Rückzugbewegung des Stempels (51) vorzugsweise im Zuge der Formöffnung nach genügender Abkühlung und Verfestigung des Angusses erfolgt.

5. Verfahren nach einem der Ansprüche 1 bis 4,
**dadurch gekennzeichnet,**
**dass** der Stempel (51) bei zurückgezogenem Ausstosserbolzen (53) mit einem Hinterschnitt (56) in dem Stempel (51) einen Halteraum (54) für den Anguss bildet, in dem der Anguss nach genügender Verfestigung gefasst und nach geöffneter Form durch Betätigung des Ausstosserbolzens (53) wieder ausgestossen wird.

6. Verfahren nach einem der Ansprüche 1 bis 5,
**dadurch gekennzeichnet,**
**dass** die Einspritzdüse (7) verschliessbar ausgebildet ist, wobei die erstmalige Dosierung beim Anfahren für eine neue Produktion bei geschlossener Düse und die darauffolgenden Produkttionszyklen bei dauernd offener Düse durchgeführt werden.

7. Vorrichtung zum automatischen Herstellen von dünner Platten, insbesondere von optischen Datenträgern (60) oder CD'S, mit einer Mittelöffnung (61), mit dem Verfahren nach einem der Ansprüche 1 bis 6, wobei die Vorrichtung umfasst: eine Spritzgiessmaschine (10) mit wenigstens einer beweglichen Formhälfte (23); Steuermittel zum zyklischen Steuern des Formschlusses, der Einspritzung, der Abkühlphase und der Dosierphase für den nächsten Zyklus sowie der Entnahme der verfestigten Produkt; einen Stempel für die Erzeugung der Mittelöffnung (61), der auf eine matrizenartige Öffnung zu- und wegbewegbar ist, wobei die Steuermittel ausgebildet sind zur Ausführung der Stempelbewegung während der Abkühlphase, jedoch vor einer vollstandigen Verfestigung des Angussbereiches
**dadurch gekennzeichnet, dass** die Steuermittel ausgebildet sind zur Ausführung der Stempel bewegung, zeitlich nach dem Abschluss der Nachdruckphase oder der Prägephase, wobei die Steuermittel derart ausgelegt sind, dass die Dosierphase für den jeweils nachfolgenden Spritzzyklus mit dem Abschluss der Bewegung des Stempels (51) für den Durchbruch der Mittelöffnung beginnt, und die Rückströmmasse aus der Reduktion des Angussvolumens für die Dosiermenge miteingerechnet wird.

8. Vorrichtung nach Anspruch 7,
**dadurch gekennzeichnet,**
**dass** sie eine feststehende Formhälfte (12) sowie eine bewegliche Formhälfte (23) aufweist, wobei der Stempel (51) mit Ausstosserbolzen (53) auf der Seite der beweglichen Formhälfte (23) und die Einspritzdüse (7) auf der Seite der feststehenden Formhälfte (12) angeordnet ist.

9. Vorrichtung nach einem der Ansprüche 7 oder 8,
**dadurch gekennzeichnet,**
**dass** die Düse (7) einen Verschluss, insbesondere einen Nadel-, Drehschieber- oder Steckschieberverschluss (73), aufweist zur Bereitstellung einer dosierten Menge flüssiger Schmelze unter kontrolliertem Druck.

10. Vorrichtung nach einem der Ansprüche 7 bis 9,
**dadurch gekennzeichnet,**
**dass** der Verschlusskörper (73) in offenem Zustand einen freien Durchströmquerschnitt ohne Flussstörung zwischen Schneckenvorraum (47, 72) und der Kavität (24) der Spritzform aufweist.

11. Vorrichtung nach einem der Ansprüche 7 bis 10,
**dadurch gekennzeichnet,**
**dass** der Verschluss (73) als gesteuertes Startventil ausgebildet ist, derart, dass beim erstmaligen Anfahren für eine neue Produktionsserie der Verschluss (73) während der ersten Dosierphase geschlossen, für die anschliessenden normalen Produktionszyklen dauernd offen und die Düse (7) vorzugsweise dauernd am Werkzeug angepresst bleibt.

## Claims

1. Method for the automatic production of thin discs, in particular of optical data carriers (80) or CDs having a central aperture, the two mould halves each being positioned for a starting position of an injection cycle for the injection phase, a metered amount of resin being injected via an injection nozzle, the perforation for the central aperture being produced by a movement of a male mould after the end of the injection phase during the cooling phase, but before the sprue region has completely solidified by reduction of the sprue volume, the moulded part being cooled to a sufficient solidity for removal, and the finished disc and the sprue element having the central aperture being removed from the mould halves, **characterised in that** the perforation for the central aperture (61) is produced after the end of the dwell pressure phase or the embossing phase by backflow into the chamber (47, 72) in front of the screw and the metering phase for each subsequent injection cycle starts at the end of the movement of the male mould (51) for the perforation of the central aperture, the backflow mass from the reduction of the sprue volume being included in the calculation of the metered amount.

2. Method according to claim 1, **characterised in that** for the production of the central aperture (61), the male mould is moved toward and away from a female mould-type aperture and is controlled in terms of time and/or as a function of the melt temperature and/or as a function of the pressure in the mould.

3. Method according to either claim 1 or claim 2, **characterised in that** the injection nozzle (7) is permanently open during the production and the nozzle preferably remains pressed against the injection mould.

4. Method according to any one of claims 1 to 3, **characterised in that** drive means, which are controllable for the sprue element, are associated with the male mould (51) and an ejector bolt (53) guided into the male mould (51), wherein for the adjustment of a moulding position, the male mould (51) is positioned slightly protruding into the mould cavity, the ejector bolt (53) being retracted, the male mould being pressed (51), for the movement, until it is just inserted into a female mould-type aperture on the injection side of the mould, and the retraction movement of the male mould (51) preferably taking place during the opening of the mould after sufficient cooling and solidification of the sprue element.

5. Method according to any one of claims 1 to 4, **characterised in that** when the ejector bolt is retracted (53), the male mould (51) forms a holding chamber (54) for the sprue element with an undercut (56) in the male mould (51), in which holding chamber the sprue element is seized after sufficient solidification and is ejected after the mould is opened by actuation of the ejector bolt (53).

6. Method according to any one of claims 1 to 5, **characterised in that** the injection nozzle (7) may be closed, initial metering at the start-up of a new production run taking place with the nozzle closed and the subsequent production cycles being carried out with the nozzle permanently open.

7. Device for the automatic production of thin discs, in particular of optical data carriers (60) or CDs having a central aperture (61) by the method according to any one of claims 1 to 6, the device comprising: an injection-moulding machine (10) having at least one movable mould half (23), control means for cyclically controlling the mould closure, the injection, the cooling phase and the metering phase for the subsequent cycle and the removal of the solidified products, a male mould for the production of the central aperture (61), which male mould may be moved toward and away from a female mould-type aperture, the control means being configured for carrying out the movement of the male mould during the cooling phase, but before complete solidification of the sprue region, **characterised in that** the control means are configured for carrying out the movement of the male mould after the end of the dwell pressure phase or the embossing phase, the control means being configured such that the metering phase for each subsequent injection cycle starts at the end of the movement of the male mould (51) for the perforation of the central aperture, and the backflow mass from the reduction of the sprue volume being included in the calculation of the metered amount.

8. Device according to claim 7, **characterised in that** it comprises a fixed mould half (12) and a movable mould half (23), the male mould (51) comprising the ejector bolt (53) being arranged on the side of the movable mould half (23) and the injection nozzle (7) being arranged on the side of the fixed mould half (12).

9. Device according to either claim 7 or claim 8, **characterised in that** the nozzle (7) comprises a closure element, in particular a needle, rotary valve or insertion valve closure element (73), for the provision of a metered amount of liquid melt under controlled pressure.

10. Device according to any one of claims 7 to 9, **characterised in that** the closure element (73) in the open state exhibits a free through-flow cross-section without flow disturbance between the chamber (47, 72) in front of the screw and the cavity (24) of the injection mould.

11. Device according to any one of claims 7 to 10, **characterised in that** the closure element (73) is configured as a controlled starting valve such that during the initial start-up of a new production run, the closure element (73) is closed during the first metering phase, permanently open for the subsequent normal production cycles, and the nozzle (7) preferably remains pressed against the mould.

## Revendications

1. Procédé de fabrication automatique de plaques minces, notamment de supports de données optiques (80) ou de CD dotés d'un orifice central, les deux demi-moules étant positionnés respectivement pour une position de départ d'un cycle d'injection pour la phase d'injection, une quantité dosée de résine étant injectée par une buse d'injection, le passage pour l'orifice central étant généré par un déplacement d'un poinçon à la fin de la phase d'injection pendant la phase de refroidissement mais avant une consolidation totale de la zone d'attaque de coulée, par la réduction du volume d'attaque de coulée, la pièce moulée étant refroidie jusqu'à ce qu'elle ait atteint une solidité de prélèvement suffisante et la plaque fabriquée ainsi que l'attaque de coulée comprenant la partie d'orifice central étant retirées des demi-moules,
**caractérisé en ce que**
le passage pour l'orifice central (61) est généré à la fin de la phase de compression finale ou de la phase d'estampage par le reflux dans l'antichambre de la vis (42, 72) et la phase de dosage pour le cycle d'injection respectivement consécutif démarre à la fin du déplacement du poinçon (51) pour le passage de l'orifice central, la masse de reflux provenant de la réduction du volume d'attaque de coulée pour la quantité de dosage étant prise en compte.

2. Procédé selon la revendication 1,
**caractérisé en ce que**
pour produire l'orifice central (61), le poinçon est déplacé en direction d'un orifice du type matrice et à distance de celui-ci et est guidé dans le moule de façon temporelle et/ou en fonction de la température de la masse fondue et/ou en fonction de la pression.

3. Procédé selon l'une quelconque des revendications 1 ou 2,
**caractérisé en ce que**
la buse d'injection (7) reste toujours ouverte pendant la production et la buse reste de préférence pressée contre l'outil d'injection.

4. Procédé selon l'une quelconque des revendications 1 à 3,
**caractérisé en ce que**
des moyens d'entraînement pouvant être commandés sont associés au poinçon (51) ainsi qu'à un boulon éjecteur (53) guidé dans le poinçon (51) pour l'attaque de coulée, sachant que
- pour le réglage d'une position de moulage, le poinçon (51) pourvu du boulon éjecteur (53) en retrait est positionné en dépassant légèrement de la cavité de moule,
- le poinçon (51), pour se déplacer jusqu'à s'enfoncer légèrement dans un orifice de type matrice, est pressé sur le côté d'injection du moule,
- et le déplacement de retrait du poinçon (51) s'effectue de préférence au cours de l'ouverture du moule, après que l'attaque de coulée se soit suffisamment refroidie et consolidée.

5. Procédé selon l'une quelconque des revendications 1 à 4,
**caractérisé en ce que**
le poinçon (51), lorsque le boulon éjecteur (53) est en retrait, forme avec une contre-dépouille (56) dans le poinçon (51) un espace de retenue (54) pour l'attaque de coulée, dans lequel l'attaque de coulée est saisie après une consolidation suffisante et est à nouveau éjectée après que le moule ait été ouvert, par l'actionnement du boulon éjecteur (53).

6. Procédé selon l'une quelconque des revendications 1 à 5,
**caractérisé en ce que**
la buse d'injection (7) est conçue de manière à pouvoir être fermée, le premier dosage étant réalisé au démarrage d'une nouvelle production lorsque la buse est fermée et les cycles de production consécutifs étant réalisés lorsque la buse est ouverte de façon permanente.

7. Dispositif de fabrication automatique de plaques minces, notamment de supports de données optiques (60) ou de CD, dotés d'un orifice central (61), par le procédé selon l'une quelconque des revendications 1 à 6, le dispositif comportant une machine de moulage par injection (10) pourvue au moins d'un demi-moule mobile (23) ; de moyens de commande destinés à commander de façon cyclique la fermeture du moule, l'injection, la phase de refroidissement et la phase de dosage pour le prochain cycle ainsi que le prélèvement des produits fabriqués ; d'un poinçon pour produire l'orifice central (61), qui peut se déplacer en direction de l'orifice du type matrice et à distance de celui-ci, les moyens de commande étant conçus pour réaliser le déplacement du poinçon pendant la phase de refroidissement, mais avant une consolidation complète de la zone d'attaque de coulée, **caractérisé en ce que** les moyens de commande sont conçus pour réaliser le déplacement du poinçon, à la fin de la phase de compression finale ou de la phase d'estampage, les moyens de commande étant dimensionnés de telle sorte que la phase de dosage pour le cycle d'injection respectivement suivant démarre à la fin du déplacement du poinçon (51) pour le passage de l'orifice central, et la masse de reflux provenant de la réduction du volume d'attaque de coulée pour la quantité de dosage étant prise en compte.

8. Dispositif selon la revendication 7,
**caractérisé en ce**
**qu'**il comprend un demi-moule fixe (12) ainsi qu'un demi-moule mobile (23), le poinçon (51) pourvu du boulon éjecteur (53) étant disposé sur le côté du demi-moule mobile (23) et la buse d'injection (7) sur le côté du demi-moule fixe (12).

9. Dispositif selon l'une quelconque des revendications 7 ou 8,
**caractérisé en ce que**
la buse (7) comprend une fermeture, notamment une fermeture à pointeau, à tiroir rotatif où à tiroir à fiche (73), pour mettre à disposition une quantité dosée de masse fondue liquide sous pression contrôlée.

10. Dispositif selon l'une quelconque des revendications 7 à 9,
**caractérisé en ce que**
le corps de fermeture (73) comprend à l'état ouvert une section de passage libre sans perturbation du fluage entre l'antichambre de la vis (47, 72) et la cavité (24) du moule d'injection.

11. Dispositif selon l'une quelconque des revendications 7 à 10,
**caractérisé en ce que**
la fermeture (73) est conçue comme une soupape de démarrage commandée, de telle sorte qu'au premier lancement d'une nouvelle série de production, la fermeture (73) reste fermée pendant la première phase de dosage, reste ouverte en permanence pour les cycles de production normaux consécutifs et la buse (7) reste de préférence pressée en permanence contre l'outil.
